# EUROPÄISCHE PATENTSCHRIFT

(11) **EP 0 521 263 B1**
(45) Veröffentlichungstag und Bekanntmachung des Hinweises auf die Patenterteilung: **07.09.1994**
(21) Anmeldenummer: 92107880.4
(22) Anmeldetag: 11.05.1992
(51) Int. Cl.: B23D 51/02, B23D 49/16, B23D 59/00

(54) **Stichsäge**
Sabre saw
Scie sauteuse

(30) Priorität: 03.07.1991 DE 4121989
(43) Veröffentlichungstag der Anmeldung: 07.01.1993
(73) Patentinhaber: Festo KG, D-73734 Esslingen (DE)
(72) Erfinder: Kutscher, Erwin, W-7333 Ebersbach-Bünzwangen (DE); Maier, Joachim, W-7321 Hattenhofen (DE)
(74) Vertreter: Abel, Martin, Dipl.-Ing.

(56) Entgegenhaltungen:
- EP-A- 0 073 693
- EP-A- 0 242 519
- CH-A- 356 587
- DE-U- 8 507 818
- US-A- 2 984 757
- US-A- 4 628 605

## Beschreibung

Die Erfindung betrifft eine Stichsäge mit einem auf das zu sägende Werkstück aufzulegenden Sägetisch, einer auf den Sägetisch, insbesondere verschwenkbar, aufgesetzten Antriebseinheit zum Antreiben eines von der Antriebseinheit nach unten bis unterhalb des Sägetischs abstehenden Sägeblatts zu einer periodischen Auf- und Abbewegung, einer der Sägeblattrückseite zugeordneten Stützrolle und zwei etwa in Höhe des Sägetisches in Querrichtung mit einem der Sägeblattdicke entsprechenden Abstand zueinander angeordneten Stabilisierungselementen zur seitlichen Führung des Sägeblattes, wobei jedes Stabilisierungselement an einem der jeweiligen Sägeblattseite zugewandten Tragarm eines mit dem Gehäuse der Antriebseinheit starr verbundenen Haltestücks angeordnet ist.

Bei einer aus der DE-C 36 13 279 hervorgehenden Stichsäge erstrecken sich die beiden Tragarme beiderseits des Sägeblattes vom Gehäuse der Antriebseinheit ausgehend in Seitenansicht gesehen parallel zum Sägeblatt nach unten, wobei an einen mit verhältnismäßig großem Abstand zum Sägeblatt verlaufenden Bereich ein stumpfwinkelig nach innen zum Sägeblatt gerichteter, das jeweilige Stabilisierungselement tragender Bereich angesetzt ist, so daß die beiden Tragarme in Stirnansicht ein einem auf dem Kopf stehenden Haus ähnliches Haltestück ergeben. Durch den unteren schräg nach innen gerichteten Verlauf der Tragarme soll erreicht werden, daß ein zum Ausführen von Schrägschnitten erforderliches Verschwenken der Antriebseinheit möglichst nicht behindert wird. Die seitlich weit ausladenden Tragarme stellen jedoch nach wie vor ein Hindernis dar, wenn man die Antriebseinheit um einen verhältnismäßig großen Winkel verschwenken möchte. Dem versucht man in dem bekannten Falle zwar dadurch zu begegnen, daß man in den Sägetisch Ausnehmungen einformt, in die beim Verschwenken der jeweilige Tragarm eintauchen kann.Dies bringt jedoch eine Schwächung des Sägetisches mit sich. Außerdem erhält man durch diese Maßnahme nur einen um den der Ausnehmungstiefe entsprechenden Bogenwinkel vergrößerten Schwenkwinkel. Diese Schwierigkeiten könnten nur durch ein nach oben Verlagern der Stabilisierungselemente ausgeräumt werden. Das Sägeblatt würde dann aber in einem entsprechend größeren Abstand zum Werkstück geführt werden.

Ein weiterer Nachteil liegt darin, daß das breite Haltestück auch einer freien Sicht der sägenden Person zur momentanen Sägestelle im Wege ist.

Der vorliegenden Erfindung liegt deshalb die Aufgabe zugrunde, eine Stichsäge der eingangs genannten Art zu schaffen, bei der trotz nahe der Sägetisch-Unterseite erfolgender Führung des Sägeblattes das Haltestück beiderseits des Sägeblattes weniger Platz in Anspruch nimmt.

Diese Aufgabe wird erfindungsgemäß dadurch gelöst, daß sich das Haltestück ohne seitliches Überlappen der Stützrolle hinter der Stützrolle nach unten und unterhalb der Stützrolle mit seinen Tragarmen nach vorne erstreckt.

Die Tragarme verlaufen also nicht mehr von der Seite sondern von hinten her zum Sägeblatt, was ein wesentlich schmäleres Haltestück ergibt. Dabei ist die in Querrichtung gemessene Abmessung des Haltestücks unabhängig von der Stützrollenbreite, da die Stützrolle nicht zwischen die Tragarme greift.

Es ist ersichtlich, daß sich die Erfindung auch bei Stichsägen mit nicht verschwenkbarer Antriebseinheit verwirklichen läßt. In einem solchen Falle ist das schmale Haltestück ebenfalls von Vorteil, und zwar nicht nur wegen der Möglichkeit einer großen Nähe der Stabilisierungselemente zur Sägetisch-Unterseite, sondern auch weil das Haltestück die Sicht zur Sägeblattvorderseite und zur Anreißlinie auf dem Werkstück praktisch nicht beeinträchtigt.

Zweckmäßige Ausgestaltungen der Erfindung sind in den Unteransprüchen angegeben.

Ein Ausführungsbeispiel der Erfindung und deren vorteilhafte Ausgestaltungen werden nun anhand der Zeichnung erläutert. Es zeigen:
- Fig. 1: eine erfindungsgemäße Stichsäge in schematischer Seitenansicht, wobei der untere Bereich des Gehäuses der Antriebseinheit weggebrochen und der dort im Gehäuse verlaufende Absaugkanal ebenso wie der darunter befindliche Sägetisch im Längsschnitt dargestellt ist, während das die Stabilisierungselemente tragende Haltestück und der Stützrollenhalter, die im Bereich der Längsschnittebene angeordnet sind, in Seitenansicht erscheinen,

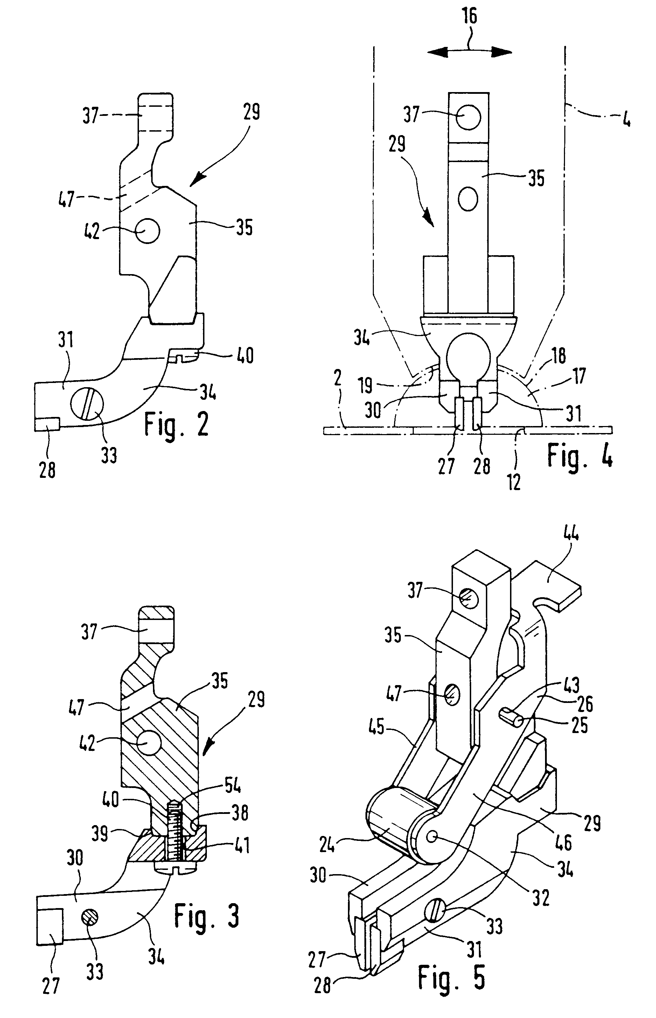

- Fig. 2: das die Stabilisierungselemente haltende Haltestück in gesonderter Darstellung in Seitenansicht,
- Fig. 3: das Haltestück im zur Zeichenebene der Figu. 1 und 2 parallelen Längsschnitt,
- Fig. 4: das gleiche Haltestück in Stirnansicht gemäß Pfeil IV in Fig. 1, wobei der Sägetisch und die Antriebseinheit strichpunktiert angedeutet sind, und
- Fig. 5: das Haltestück zusammen mit dem pendelnd an ihm gelagerten Stützrollenhalter in gesonderter Darstellung in Schrägansicht.
Die Stichsäge 1 weist einen Sägetisch 2 auf, der mit seiner Unterseite 3 auf das zu sägende Werkstück aufgelegt wird.

Die Stichsäge 1 besitzt ferner oberhalb des Sägetisches 2 eine Antriebseinheit 4, die in einem Gehäuse 5 einen Antriebsmotor 6 und ein Getriebe 7 enthält, über das ein Sägeblatt 8 zu einer periodischen Auf- und Abbewegung angetrieben wird. Beim Ausführungsbeispiel ist der Antriebsmotor 6 ein elektrischer Stabmotor, der in einem länglichen, gleichzeitig als Handgriff zum Halten der Stichsäge ausgebildeten Gehäuseteil 9 untergebracht ist, das sich oberhalb des Sägetisches mit Abstand zum Werkstück parallel hierzu nach hinten über den Sägetisch hinaus erstreckt.Die Stromzufuhr erfolgt mittels eines vom hinteren Ende des Gehäuseteils 9 abgehenden elektrischen Kabels 10. Das Getriebe 7 befindet sich in einem vorderen Gehäuseteil 11, das nach oben hin eine knaufähnliche Verlängerung zum Ergreifen mit der anderen Hand besitzt.

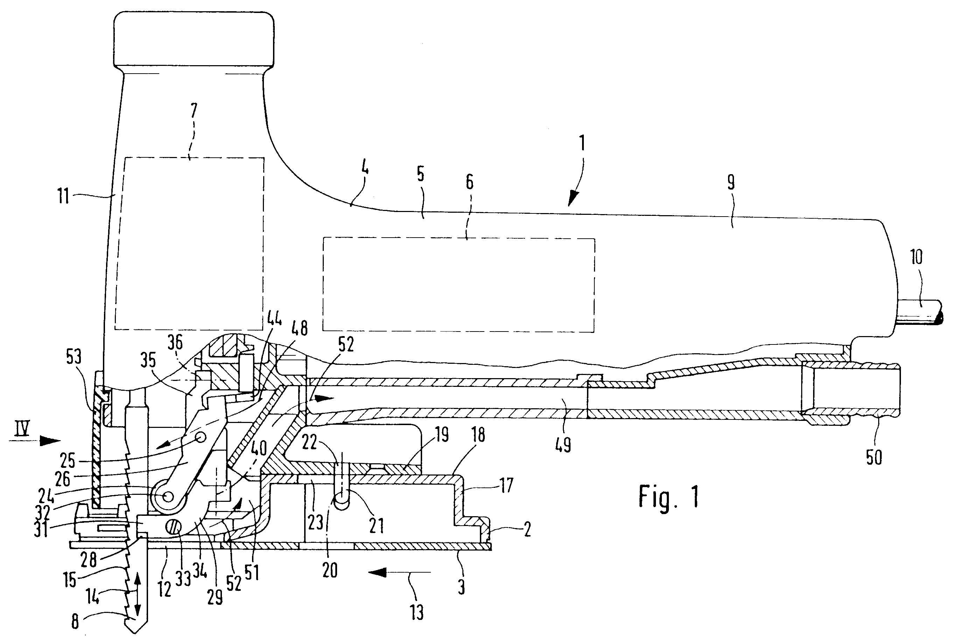

Das Sägeblatt 8 ist am vorderen Endbereich der Stichsäge angeordnet und wird mit seinem oberen Ende von einem durch das Gehäuse 4 verdeckten Sägeblatthalter gehalten, der über das Getriebe 7 angetrieben wird. Das Sägeblatt 8 erstreckt sich von der Antriebseinheit 4 in Seitenansicht (Fig. 1) gesehen im wesentlichen rechtwinkelig zum Sägetisch 2 nach unten bis unterhalb des Sägetischs 2, der im Bereich des Sägeblattes 8 eine nach vorne hin offene Ausnehmung 12 für den Durchtritt des Sägeblattes 8 enthält. Schiebt man die Stichsäge 1 über das betreffende Werkstück nach vorne, d.h. in Vorschubrichtung 13, sägt das auf und ab (Doppelpfeil 14) gehende Sägeblatt 8 mit seiner an der Sägeblatt-Vorderseite angebrachten Sägezahnreihe 15, und zwar mit dem nach unten hin über den Sägetisch 2 vorstehenden Bereich, einen Schlitz in das Werkstück.

Die Antriebseinheit 4 ist auf den Sägetisch 2 aufgesetzt und dabei um die Vorschubrichtung verschwenkbar und in der jeweiligen Schwenkstellung bewegbar. Die Antriebseinheit kann also aus ihrer dargestellten Lage, in der das Sägeblatt 8 in Stirnansicht gemäß Pfeil IV in Fig. 1 gesehen senkrecht zum Sägetisch 2 und somit zum zu sägenden Werkstück steht, nach der einen oder anderen Seite hin verschwenkt werden (Doppelpfeil 16 in Fig. 4), so daß das Sägeblatt 8 dann schräg zum Werkstück ausgerichtet ist und an diesem einen entsprechenden Schrägschnitt, beispielsweise einen Gehrungsschnitt anbringt. Zur verschwenkbaren Lagerung der Antriebseinheit 4 ist an der Oberseite des Sägetischs 1 ein hohlprofilförmiger Aufsatz 17 vorhanden, der einstückig an den Sägetisch angeformt ist. Er ist im Längsmittenbereich des Sägetisches angeordnet und erstreckt sich in dessen mit der Vorschubrichtung 13 zusammenfallenden Längsrichtung. Der Aufsatz 17 ist im Bereich hinter dem Sägeblatt 8 angeordnet und verläuft etwa bis zur Sägetisch-Rückseite. Die Oberseite 18 des Aufsatzes 17 ist dem Mantelabschnitt eines Kreiszylinders entsprechend geformt, wobei die Winkelerstreckung beim dargestellten Ausführungsbeispiel annähernd 180° beträgt. Die Antriebseinheit 4 weist an ihrer Unterseite einen komplementär zum Aufsatz 17 gewölbten Abschnitt 19 mit kleinerer Winkelerstreckung auf und sitzt mit diesem Abschnitt 19 auf der Oberseite 18 des Aufsatzes 17. In dieser Weise kann die Antriebseinheit unter Auflage des Abschnitts 19 auf dem Aufsatz 17 ihre Seitwärts-Schwenkbewegung gemaß Doppelpfeil 16 ausführen. Die Schwenkachse für diese Schwenkbewegung ist hierbei durch die nicht körperliche Längsachse des zylindrischen Aufsatzes 17 vorgegeben, wobei sie zweckmäßigerweise so gelegt ist, daß sie in der Unterseite 3 des Sägetisches 2 und somit auf der Werkstückoberseite verläuft. Zum Festlegen der Antriebseinheit 4 in der jeweiligen Schwenkstellung dient eine strichpunktiert angedeutete Schraube 20, die ein in Umfangsrichtung des Aufsatzes 17 verlaufendes Langloch 21 am Aufsatz durchsetzt und mit ihrem Schraubenkopf von unten her am Langlochrand anliegt. Der Abschnitt 19 der Antriebseinheit weist eine korrespondierende Bohrung 22 auf, wobei die Schraube 20 entweder in die Bohrung 22 eingeschraubt oder durch die Bohrung 22 hindurchgeführt und mit einer aufgeschraubten Mutter festgespannt wird. Das Langloch 20 kreuzt einen Längsschlitz 23 im Aufsatz 17, so daß die Antriebseinheit 4 auch in Vorschubrichtung verlagert werden kann, dann jedoch nicht mehr verschwenkbar ist.

Da das Sägeblatt 8 nur mit seinem oberen Ende befestigt ist, ist eine Einrichtung zur seitlichen Führung und rückseitigen Abstützung des Sägeblattes vorhanden. Insbesondere durch die seitliche Führung wird die Präzision des Sägeschnitts wesentlich verbessert. Die genannte Einrichtung enthält zunächst eine der Sägeblattrückseite zugeordnete Stützrolle 24, die zweckmäßigerweise an einem mittels einer Pendelachse 25 pendelnd gelagerten Stützrollenhalter 26 angeordnet ist, der synchron zur Auf- und Abbewegung des Sägeblattes 8 zu einer Pendelbewegung antreibbar ist, so daß die Stützrolle 24 pendelnd auf die Sägeblattrückseite einwirkt und das Sägeblatt 8 eine pendelnde Hubbewegung ausführt.

Zur seitlichen Führung des Sägeblattes 8 sind zwei etwa in Höhe des Sägetisches 2 angeordnete Stabilisierungselemente 27,28 vorhanden, die in Querrichtung, d.h. rechtwinkelig zur Vorschubrichtung 13, einen der Sägeblattdicke entsprechenden Abstand zueinander besitzen, so daß sie an den Flachseiten des Sägeblattes anliegen. Die Stabilisierungselemente 27,28 weisen beim zweckmäßigen Ausführungsbeispiel plättchenförmige Gestalt auf, so daß sich eine verhältnismäßig große Anlagefläche am Sägeblatt ergibt. Sie bestehen aus einem thermisch hochgelastbaren, verschleißarmen Material, wobei insbesondere Hartmetall, jedoch auch ein Keramikmaterial wie Oxidkeramik geeignet ist. Zur Halterung der Stabilisierungselemente 27,28 ist ein fest mit der Antriebseinheit 4 bzw. dessen Gehäuse 5 verbundenes Haltestück 29 vorhanden, das einen starre Verbindung zwischen der Antriebseinheit 4 und den Stabilisierungselementen 27,28 herstellt. Dabei ist jedes Stabilisierungselement an einem der jeweiligen Sägeblattseite zugewandten Tragarm 30 bzw. 31 angeordnet. Sie können, wie dargestellt, in eine an der dem Sägeblatt zugewandten Seite des jeweiligen Tragarms angeordnete Ausnehmung eingesetzt sein. Das Befestigen der Stabilisierungselemente an den Tragarmen kann in herkömmlicher Weise erfolgen, so beispielsweise im Falle von Hartmetallplättchen durch Löten.

Das Sägeblatt 8 sollte möglichst weit unten im Bereich der Werkstückoberseite geführt werden. Dementsprechend weit unten sollten sich die Stabilisierungselemente 27,28 befinden. Andererseits muß berücksichtigt werden, daß die Stabilisierungselemente 27,28 und das sie tragende Haltestück 29 das Verschwenken der Antriebseinheit 4 in Richtung des Doppelpfeils 16 nicht behindern sollen. Aus diesem Grunde ist es von Vorteil, das Haltestück 29 in Stirnansicht gemäß Fig. 4 gesehen möglichst schmal auszuführen. Hierzu ist vorgesehen, daß sich das Haltestück 29 ohne seitliches Überlappen der Stützrolle 24 hinter der Stützrolle 24 nach unten und unterhalb der Stützrolle 24 mit seinen Tragarmen 3o,31 nach vorne zum Sägeblatt erstreckt. Das Haltestück 29 umkurvt also sozusagen die Stützrolle 24 von hinten her, so daß die in Querrichtung gemessene Breite des Haltestücks unabhängig von der Breite der Stützrolle 24 ist und der untere Tragarmbereich des Haltestücks entsprechend schmal gemacht werden kann.

Beim zweckmäßigen Ausführungsbeispiel ist in diesem Zusammenhang ferner vorgesehen, daß mindestens der die Stabilisierungselemente 27,28 tragende Bereich des Haltestücks 29 in Querrichtung nicht über die Stützrolle 24 einschließlich deren vom Stützrollenhalter 26 gebildeten Lagerung vorsteht.

Das Haltestück 29 weist zweckmäßigerweise eine von hinten oben nach unten vorne der Stützrolle 24 ähnlich abgerundete Gestalt auf, wobei die Stützrolle 24 innerhalb des vom Haltestück 29 gebildeten Bogens angeordnet ist. Auf diese Weise befindet sich die Stützrolle 24 unmittelbar oberhalb der Tragarme 3o,31 und somit an der für sie am weitesten unten möglichen Stelle.

Wie bereits erwähnt, bildet das Haltestück 29 eine starre Verbindung zwischen den Stabilisierungselementen und der Antriebseinheit. Dementsprechend stabil und toleranzfrei ist die seitliche Sägeblattführung. Demgegenüber spielt bei der Stützrolle 24 das an der Rollenachse 32 oder der Pendelachse 25 auftretende Spiel keine Rolle, da sie nur zur rückwärtigen Abstützung dient und somit die Seitenstabilität des Sägeblattes 8 nicht beeinflußt.

Der nach vorne gerichtete Bereich des Haltestücks 29, also die Tragarme 3o, 31 mit den Stabilisierungselementen 27,28, kann in die Ausnehmung 12 des Sägetisches 2 eintauchen.

Zweckmäßigerweise sind die Tragarme 3o, 31 an ihren den vorderen freien Enden entgegengesetzten Enden einstückig miteinander verbunden, indem der die beiden Tragarme aufweisende Bereich des Haltestücks 29 geschlitzte Gestalt besitzt und die beiden den Schlitz begrenzenden Schlitzschenkel die Tragarme 3o,31 bilden.

Sägeblätter können eine unterschiedliche Dicke aufweisen. Damit man bei jeder Sägeblattdicke eine exakte seitliche Führung erhält, kann der Abstand der beiden Tragarme 3o,31 und somit der beiden Stabilisierungselemente 27,28 voneinander verstellbar sein. Ein zweckmäßiges Ausführungsbeispiel hierfür besteht darin, daß die beiden Tragarme 3o,31 mittels einer den Schlitz zwischen den Tragarmen durchquerenden Verstellschraube 33 aufeinander zu bzw. voneinander weg bewegbar sind. Dabei kann die Schraube 33 durch eine Steckbohrung des einen Tragarms 31 gesteckt und in eine fluchtende Gewindebohrung des anderen Tragarms 3o eingeschraubt sein. Der Kopf der Schraube 33 stützt sich außen an dem einen Tragarm 31 ab. Bei gelöster Verstellschraube 33 nehmen die einstückig miteinander verbundenen Tragarme 3o, 31 einengrößeren Abstand zueinander ein. Dreht man dann die Verstellschraube im Sinne eines Einschraubens in den Tragarm 3o, bewegen sich die Tragarme entgegen ihrer Eigenelastizität aufeinander zu. Dabei bewegen sich beide Tragarme in gleichem Ausmaß.

Eine weitere Justiermöglichkeit besteht darin, daß mindestens der die Tragarme 3o, 31 aufweisende Bereich in Querrichtung verstellbar und in der jeweiligen Querlage festlegbar angeordnet ist. Auf diese Weise lassen sich die beiden Stabilisierungselemente 27,28 gemeinsam in Querrichtung verlagern. Diese Justiermöglichkeit ist von dem Einstellen des Abstandes der Stabilisierungselemente voneinander mittels der Verstellschraube 33 unabhängig. Durch ein solches Justieren kann die Lage der Stabilisierungselemente genau auf die Lage des Sägeblattes abgestimmt werden.

Das Haltestück kann insgesamt in Querrichtung verstellbar an der Antriebseinheit befestigt sein. Die Anordnung kann wie beim zweckmäßigen Ausführungsbeispiel auch so getroffen werden, daß das Haltestück 29 mehrteilig ist und der die beiden Tragarme 3o, 31 aufweisende Bereich von einem Tragarmteil 34 gebildet wird, das in Querrichtung verstellbar und in der jeweiligen Querlage festlegbar mit einem starr mit dem Gehäuse der Antriebseinheit 4 verbundenen Befestigungsteil 35 verbunden ist. Dabei kann das Befestigungsteil fest mit dem Gehäuse der Antriebseinheit verschraubt sein. Diese Befestigungsschraube 36, die eine entsprechende Bohrung 37 des Befestigungsteils 35 durchgreift, ist in Fig. 1 strichpunktiert angedeutet.

Die Querverstellung kann beispielsweise dadurch erreicht werden, daß das Tragarmteil 34 und das Befestigungsteil 35 über eine in Querrichtung verlaufende Nut 38 am einen Teil und ein entsprechend geformtes Gegenstück 39 am anderen Teil ineinandergreifen und aneinander geführt sind, wobei die Zentrierung durch keilartig geneigte Flanken der Nut 38 und des Gegenstücks 39 erreicht wird. Zum Feststellen des Tragarmteils 34 in der jeweiligen Querlage dient eine Justierschraube 40, die ein quer in Längsrichtung der Nut 38 gerichtetes Querloch 41 des Tragarmteils 34 durchgreift und in eine gegenüberliegende Gewindebohrung 54 des Befestigungsteils 35 eingeschraubt ist. Der Kopf der Justierschraube 40 preßt das Tragarmteil 34 gegen das Befestigungsteil 35. Die Justierschraube 4o befindet sich am die beiden Tragarme 3o,31 einstückig miteinander verbindenden Bereich des Tragarmteils. Da das Tragarmteil 34 von unten her an das Befestigungsteil 35 angesetzt ist, erstreckt sich die Justierschraube 4o in Höhenrichtung. Während das Befestigungsteil 35 eine im wesentlichen nach oben gerichtete Längsgestalt besitzt, bildet das Tragarmteil 34 den die Stützrolle 24 umrundenden Bogen.

Es versteht sich, daß die Gestalt des Befestigungsteils 35 auch anders sein kann, da sie sich nach der Befestigungsstelle an der Antriebseinheit 4 bzw. der Ausbildung des Gehäuses der Antriebseinheit richtet.

Das Haltestück wird zweckmäßigerweise von einem oder mehreren Metallgußteilen gebildet. Dabei kann vorgesehen sein, daß mindestens der die beiden Tragarme 3o, 31 aufweisende Bereich des Haltestücks 29 von einem Stahlgußteil, insbesondere von einem Stahl-Feinfußteil gebildet wird. Beim Ausführungsbeispiel besteht das Befestigungsteil 35 demgegenüber aus Aluminium-Druckguß.

Der die Stützrolle 24 haltende Stützrollenhalter kann abseits des die Stabilisierungselemente tragenden Haltestücks an der Antriebseinheit 4 befestigt sein. Beim Ausführungsbeispiel ist dagegen zweckmäßigerweise vorgesehen, daß der Stützrollenhalter 26 am hinten oberhalb der Stützrolle 24 angeordneten Bereich des Haltestücks 29 gelagert ist. Bei der zweiteiligen Ausbildung des Haltestücks 29 des Ausführungsbeispiels erfolgt diese Lagerung am oberen Befestigungsteil 35. Der Stützrollenhalter 26 ist somit zusammen mit dem Befestigungsteil 35 unverrückbar fest angeordnet, während das Tragarmteil 34, wie geschildert, in Querrichtung justierbar ist. Dementsprechend besitzt die Stützrolle 24 eine solche Breite, daß sie bei jeder Justierstellung des Tragarmteils 34 auf das Sägeblatt 8 einwirkt.

Der Stützrollenhalter 26 erstreckt sich also von vorne unten, wo sich die Stützrolle 24 befindet, nach hinten oben zur ihn am Haltestück 29 lagernden Pendelachse 25, die ein lose durch Bohrungen 42, 43 des Haltestücks und des Rollenhalters gesteckter Achsstift ist, dessen überstehende Enden bei montierter Antriebseinheit durch stirnseitig davor angeordnete Gehäuseteile an Ort und Stelle gehalten werden.

Wie erwähnt, wird der Stützrollenhalter 26 zu einer pendelnden Bewegung um die Pendelachse 25 angetrieben. Hierzu ist der Stützrollenhalter 26 zur der Stützrolle entgegengesetzten Seite des Haltestücks 29 hin über seine Lagerstelle (Pendelachse 25) hinaus verlängert, wobei die Pendelantriebseinrichtung an diesem Verlängerungsbereich 44 angreift. Der Stützrollenhalter 26 bildet also einen zweiarmigen Hebel. Die Pendelantriebseinrichtung enthält einen auf den Verlängerungsbereich 44 von oben her einwirkenden Antriebsstift, der in in vorliegendem Zusammenhang nicht weiter interessierenden Weise synchron zum Sägeblattantrieb läuft.

Der Stützrollenhalter 26 übergreift das Haltestück 29 beidseitig gabelartig, indem die beiden die Stützrollenachse 32 beiderseits der Stützrolle lagernden Lagerschenkel 45,46 am Haltestück 29 zum Verlängerungsbereich 44 hin vorbeigeführt sind.

Beim zweckmäßigen Ausführungsbeispiel wird der Stützrollenhalter 26 von einem gebogenen Metallblechteil gebildet. Das Haltestück 29 bzw. beim Ausführungsbeispiel dessen Befestigungsteil 35 ist an der Kreuzungsstelle des Stützrollenhalters 26 verschmälert ausgebildet, so daß die vorbeilaufenden Schenkel 45,46 seitlich nicht auftragen.

Das Haltestück 29 und der Stützrollenhalter 26 bilden eine vormontierte Montageeinheit. Diese Einheit taucht von vorne unten her in das Gehäuse 5 der Antriebseinheit 4 ein, das beiderseits der genannten Einheit dieser nahe benachbarte Gehäusepartien besitzt, so daß das Haltestück mit dem Stützrollenhalter sozusagen einen Gehäuseabschluß an der betreffenden Stelle darstellen.

Die Stichsäge besitzt innerhalb ihrer Antriebseinheit 4 eine Einrichtung zum Erzeugen eines Blasluftstroms, insbesondere ein Gebläserad, wobei der Blasluftstrom zum Wegblasen des anfallenden Sägestaubs von der Werkstückoberfläche dient. In diesem Zusammenhang ist nun in weiterer Ausgestaltung der Erfindung vorgesehen, daß das Haltestück 29 an seinem oberhalb der Stützrolle 24 angeordneten Bereich eine durchgehende, schräg nach unten vorne verlaufende Bohrung 47 für den Durchtritt des Blasluftstroms vom Inneren des Gehäuses 5 in Richtung zum Sägeblatt hin aufweist. Der Weg dieses Blasluftstroms ist in Fig. 1 durch den Pfeil 48 angegeben.

Die Stichsäge 1 enthält ferner einen Staubabsaugkanal 49, der im Bereich hinter dem Sägeblatt beginnt und nach hinten verläuft. Dabei ist der Absaugkanal 49 in das Gehäuse 5 der Antriebseinheit 4, und zwar an der Gehäuseunterseite, integriert.

Er erstreckt sich bis zum hinteren Gehäuseende, wo an einen Anschlußstutzen 5o ein zu einem Staubsauger führender Saugschlauch angeschlossen werden kann. Dieser Saugluftstrom gelangt von der Werkstückoberfläche zwischen der Rückseite des Haltestücks 29 und der Vorderseite des Aufsatzes 17 hindurch nach oben zum Kanal 49. Das Haltestück 29 bildet also die vordere Begrenzung des nach oben in das Gehäuse 5 der Antriebseinheit 4 verlaufenden Mündungsabschnitts 51 des sich dann innerhalb des Gehäuses fortsetzenden Absaugkanals. Der Absaugweg ist durch die Pfeile 52 angedeutet.

Um die Absaugleistung zu verbessern, ist der Raum zwischen dem Sägetisch und der Antriebseinheit 4 um das Sägeblatt 8 vorne herum durch eine am Gehäuse der Antriebseinheit 4 lösbar befestigte Abdeckhaube 53 aus durchsichtigem Material abgedeckt.

## Patentansprüche

1. Stichsäge (1) mit einem auf das zu sägende Werkstück aufzulegenden Sägetisch (2), einer auf den Sägetisch, insbesondere verschwenkbar, aufgesetzten Antriebseinheit (4) zum Antreiben eines von der Antriebseinheit nach unten bis unterhalb des Sägetischs abstehenden Sägeblatts (8) zu einer periodischen Auf- und Abbewegung, einer der Sägeblattrückseite zugeordneten Stützrolle (24) und zwei etwa in Höhe des Sägetisches in Querrichtung mit einem der Sägeblattdicke entsprechenden Abstand zueinander angeordneten Stabilisierungselementen (27,28) zur seitlichen Führung des Sägeblattes, wobei jedes Stabilisierungselement an einem der jeweiligen Sägeblattseite zugewandten Tragarm (30,31) eines mit dem Gehäuse der Antriebseinheit starr verbundenen Haltestücks (29) angeordnet ist, dadurch gekennzeichnet, daß sich das Haltestück (29) ohne seitliches Überlappen der Stützrolle (24) hinter der Stützrolle nach unten und unterhalb der Stützrolle mit seinen Tragarmen (3o,31) nach vorne erstreckt.

2. Stichsäge nach Anspruch 1, dadurch gekennzeichnet, daß das Haltestück (29) eine von hinten oben nach unten vorne der Stützrolle (24) ähnlich abgerundete Gestalt aufweist und die Stützrolle (24) innerhalb des vom Haltestück (29) gebildeten Bogens angeordnet ist.

3. Stichsäge nach Anspruch 1 oder 2, dadurch gekennzeichnet, daß mindestens der die Stabilisierungselemente (3o,31) tragende Bereich des Haltestücks (29) in Querrichtung nicht über die Stützrolle (24) einschließlich deren Lagerung (Stützrollenhalter 26) vorsteht.

4. Stichsäge nach einem der Ansprüche 1 bis 3, dadurch gekennzeichnet, daß der die beiden Tragarme (3o,31) aufweisende Bereich des Haltestücks (29) geschlitzte Gestalt besitzt, derart, daß die beiden den Schlitz begrenzenden Schlitzschenkel an ihren den freien Enden entgegengesetzten Enden einstückig miteinander verbundene Tragarme (3o,31) bilden.

5. Stichsäge nach einem der Ansprüche 1 bis 4, dadurch gekennzeichnet, daß der Abstand der beiden Tragarme (3o,31) voneinander verstellbar ist.

6. Stichsäge nach Anspruch 5, dadurch gekennzeichnet, daß die beiden Tragarme (3o,31) mittels einer den Schlitz zwischen den Tragarmen durchquerenden Verstellschraube (33) aufeinander zu bzw. voneinander weg bewegbar sind.

7. Stichsäge nach einem der Ansprüche 1 bis 6, dadurch gekennzeichnet daß mindestens der die Tragarme (3o,31) aufweisende Bereich in Querrichtung verstellbar und in der jeweiligen Querlage festlegbar angeordnet ist.

8. Stichsäge nach Anspruch 7, dadurch gekennzeichnet, daß das Haltestück (29) mehrteilig ist und der die beiden Tragarme (3o,31) aufweisende Bereich von einem Tragarmteil (34) gebildet wird, das in Querrichtung verstellbar und in der jeweiligen Querlage festlegbar mit einem starr mit dem Gehäuse (5) der Antriebseinheit (4) verbundenen Befestigungsteil (35) verbunden ist.

9. Stichsäge nach einem der Ansprüche 1 bis 8, dadurch gekennzeichnet, daß das Haltestück (29) von einem oder mehreren Metallgußteilen gebildet wird.

10. Stichsäge nach Anspruch 9, dadurch gekennzeichnet, daß mindestens der die beiden Tragarme (3o,31) aufweisende Bereich des Haltestücks (29) von einem Stahlgußteil gebildet wird.

11. Stichsäge nach einem der Ansprüche 1 bis 1o, bei der die Stützrolle zur Erzeugung einer pendelnden Auf- und Abbewegung des Sägeblattes an einem pendelnd gelagerten und zu einer Pendelbewegung antreibbaren Stützrollenhalter angeordnet ist, dadurch gekennzeichnet, daß der Stützrollenhalter (26) am hinten oberhalb der Stützrolle (24) angeordneten Bereich des Haltestücks (29) gelagert ist.

12. Stichsäge nach Anspruch 11, dadurch gekennzeichnet, daß bei mehrteiligem Haltestück (29) der Stützrollenhalter (26) am Befestigungsteil (35) gelagert ist.

13. Stichsäge nach Anspruch 11 oder 12, dadurch gekennzeichnet, daß der Stützrollenhalter (26) zur der Stützrolle (24) entgegengesetzten Seite des Haltestücks (29) hin über seine Lagerstelle hinaus verlängert ist, wobei die Pendelantriebseinrichtung an diesem Verlängerungsbereich (44) des Stützrollenhalters (26) angreift.

14. Stichsäge nach Anspruch 13, dadurch gekennzeichnet, daß der Stützrollenhalter (26) das Haltestück (29) beidseitig gabelartig übergreift.

15. Stichsäge nach einem der Ansprüche 1 bis 14, dadurch gekennzeichnet, daß das Haltestück (29) an seinem oberhalb der Stützrolle (24) angeordneten Bereich eine durchgehende, schräg nach unten vorne verlaufende Bohrung (47) für den Durchtritt eines Blasluftstroms zum Wegblasen des Sägestaubes aufweist.

16. Stichsäge nach einem der Ansprüche 1 bis 15 mit einem im Bereich hinter dem Sägeblatt beginnenden und nach hinten verlaufenden Staubabsaugkanal, dadurch gekennzeichnet, daß das Haltestück (29) die vordere Begrenzung eines nach oben in das Gehäuse (5) der Antriebseinheit (4) verlaufenden Mündungsabschnitts (51) des sich innerhalb des Gehäuses fortsetzenden Absaugkanals (49) bildet.

## Claims

1. Compass saw (1) with a saw-table (2) for placing on the workpiece to be sawn, a drive unit (4) in particular rotatably mounted on the saw-table for driving a saw blade (8), extending downwards from the drive unit to below the saw-table to make a periodic upwards and downwards movement, a support roller (24) assigned to the back of the saw blade, and two stabilizing elements (27, 28) for lateral guidance of the saw blade mounted at roughly the height of the saw-table in the transverse direction, at a distance from one another corresponding to the thickness of the saw blade, wherein each stabilizing element is mounted on a support arm (30, 31), facing the respective side of the saw blade, of a retaining element (29) rigidly joined to the housing of the drive unit, characterized in that the retaining element (29) extends downwards behind the support roller and forwards underneath the support roller with its support arms (30, 31), without overlapping the support roller (24) at the side.

2. Compass saw according to claim 1, characterized in that the retaining element (29) has a rounded shape similar to the support roller (24) from behind upwards to the bottom forwards, and the support roller (24) is mounted within the curve formed by the retaining element (29).

3. Compass saw according to claims 1 or 2, characterized in that at least that section of the retaining element (29) supporting the stabilizing elements (30, 31) does not extend transversely beyond the support roller (24) including its mounting (support roller mount 26).

4. Compass saw according to any of claims 1 to 3, characterized in that the section of the retaining element (29) with the two support arms (30, 31) has a slotted shape, such that the slot sides bounding the slot form support arms (30, 31) joined together in one piece at the ends opposite their free ends.

5. Compass saw according to any of claims 1 to 4, characterized in that the distance between the two support arms (30, 31) is adjustable.

6. Compass saw according to claim 5, characterized in that the two support arms (30, 31) can be moved towards and away from one another by means of an adjusting screw (33) passing through the slot between the support arms.

7. Compass saw according to any of claims 1 to 6, characterized in that at least that section with the support arms (30, 31) is transversely adjustable and can be locked in the respective transverse position.

8. Compass saw according to claim 7, characterized in that the retaining element (29) is sectional, and the section with the two support arms (30, 31) is formed by a support arm element (34), connected to a fastening member (35) joined rigidly to the housing (5) of the drive unit (4), transversely adjustable, and lockable in the respective transverse position.

9. Compass saw according to any of claims 1 to 8, characterized in that the retaining element (29) is formed by one or more metal castings.

10. Compass saw according to claim 9, characterized in that at least that section of the retaining element (29) with the two support arms (30, 31) is formed by a steel casting.

11. Compass saw according to any of claims 1 to 10, in which the support roller, to generate an oscillating upwards and downwards movement of the saw blade is mounted on a floating support roller mount which can be driven in an oscillating movement, characterized in that the support roller mount (26) is mounted on the section of the retaining element (29) located at the rear above the support roller (24).

12. Compass saw according to claim 11, characterized in that, with a sectional retaining element (29), the support roller mount (26) is mounted on the fastening member (35).

13. Compass saw according to claims 11 or 12, characterized in that the support roller mount (26) is extended beyond its mounting point towards that side of the retaining element (29) opposite the support roller (24), with the oscillating drive assembly acting on this extended section (44) of the support roller mount (26).

14. Compass saw according to claim 13, characterized in that the support roller mount (26) overlaps the retaining element (29) on either side in the manner of a fork.

15. Compass saw according to any of claims 1 to 14, characterized in that the area of the retaining element (29) located above the support roller (24) has a continuous passage (47) running downwards to the front for the passage of an air blast flow to blow away sawdust.

16. Compass saw according to any of claims 1 to 15 with a dust extraction duct commencing in the area behind the saw blade and running towards the rear, characterized in that the retaining element (29) forms the front boundary of an orifice section (51) of the extraction duct (49) extending within the housing, running upwards into the housing (5) of the drive unit (4).

## Revendications

1. Scie sauteuse (1), avec une table de scie (2), à appliquer sur la pièce à scier, une unité d'entraînement (4), placée sur la table de scie, en particulier de façon à pouvoir pivoter, pour entraîner une lame de scie (8), faisant saillie de l'unité d'entraînement vers le bas, jusqu'au-dessous de la table de scie, permettant d'effectuer un mouvement de montée et de descente périodique, avec un galet d'appui (24), associé à la face arrière de la lame de scie, et deux éléments de stabilisation (27, 28), disposés à peu près au niveau de la table de scie, dans la direction transversale, avec un espacement mutuel correspondant à l'épaisseur de la lame de scie, en vue d'assurer un guidage latéral de la lame de scie, chaque élément de stabilisation étant disposé sur un bras support (30, 31), tourné vers le côté respectif de la lame de scie, d'une pièce de maintien (29), reliée rigidement au carter de l'unité de commande, caractérisée en ce que la pièce de maintien (29) s'étend, sans chevauchement latéral du galet d'appui (24), derrière ce galet d'appui, vers le dessous et au-dessous du galet d'appui, ses bras supports (30, 31) étant disposés vers l'avant.

2. Scie sauteuse selon la revendication 1, caractérisée en ce que la pièce de maintien (29) présente une forme arrondie, allant du dessus à l'arrière vers le dessous et l'avant, analogue à celle du galet d'appui (24), et le galet d'appui (24) étant disposé à l'intérieur de l'arc formé par la pièce de maintien (29).

3. Scie sauteuse selon la revendication 1 ou 2, caractérisée en ce qu'au moins la zone de la pièce de maintien (29) portant les éléments de stabilisation (30, 31) ne fait pas saillie en direction transversale au-delà du galet d'appui (24), y compris de son palier de rotation (support de galet d'appui 26).

4. Scie sauteuse selon l'une des revendications 1 à 3, caractérisée en ce que la zone, présentant les deux bras supports (30, 31), de la pièce de maintien (29) a une forme fendue, de telle façon que les deux branches, délimitant la fente, forment, sur leurs extrémités opposées aux extrémités libres, des bras supports (30, 31) leur étant reliés d'un seul tenant.

5. Scie sauteuse selon l'une des revendications 1 à 4, caractérisée en ce que la distance entre les deux bras supports (30, 31) est réglable.

6. Scie sauteuse selon la revendication 5, caractérisée en ce que les deux bras supports (30, 31) sont déplaçables l'un part rapport à l'autre, dans le sens de l'approche ou de l'écartement, au moyen d'une vis de réglage (33) traversant la fente entre les bras supports.

7. Scie sauteuse selon l'une des revendications 1 à 6, caractérisée en ce qu'au moins la zone présentant les bras supports (30, 31) est réglable en direction transversale et disposée de façon à pouvoir être bloquée dans la position transversale respective.

8. Scie sauteuse selon la revendication 7, caractérisée en ce que la pièce de maintien (29) est en plusieurs parties et que la zone présentant les deux bras supports (30, 31) est constituée par une partie de bras support (34), réglable en direction transversale et reliée à une partie de fixation (35) reliée rigidement au carter (5) de l'unité d'entraînement (4), en pouvant être bloquée dans la position transversale respective.

9. Scie sauteuse selon l'une des revendications 1 à 8, caractérisée en ce que la pièce de maintien (29) est constituée par une ou plusieurs pièces moulées en métal.

10. Scie sauteuse selon la revendication 9, caractérisée en ce qu'au moins la zone, présentant les deux bras supports (30, 31), de la pièce de maintien (29) est constituée par une pièce moulée en acier.

11. Scie sauteuse selon l'une des revendications 1 à 10, dans laquelle le galet d'appui destiné à produire un déplacement pendulaire de montée et de descente de la lame de scie est disposé sur un support de galet d'appui, tourillonnant de façon pendulaire et pouvant être entraîné en un mouvement pendulaire, caractérisée en ce que le support de galet d'appui (25) est monté sur la zone, disposée derrière et au-dessus du galet d'appui (24), de la pièce de maintien (29).

12. Scie sauteuse selon la revendication 11, caractérisée en ce que, dans le cas où la pièce de maintien (29) est en plusieurs parties, le support de galet d'appui (26) est monté sur la partie de fixation (35).

13. Scie sauteuse selon la revendication 11 ou 12, caractérisée en ce que le support de galet d'appui (26) est prolongé en direction du côté opposé au galet d'appui (24) de la pièce de maintien (29), jusqu'au delà de son point de tourillonnement, le dispositif d'entraînement pendulaire agissant sur cette zone de prolongement (44) du support de galet d'appui (26).

14. Scie sauteuse selon la revendication 13, caractérisée en ce que le support de galet d'appui (26) enchâsse, de part et d'autre, à la façon d'une fourche, la pièce de maintien (29).

15. Scie sauteuse selon l'une des revendications 1 à 14, caractérisée en ce que la pièce de maintien (29) présente sur sa zone disposée au-dessus du galet d'appui (24) un perçage (47) traversant, orienté obliquement vers le dessous et vers l'avant, pour le passage d'un courant d'air de soufflage, destiné à expulser la poussière de sciage.

16. Scie sauteuse selon l'une des revendications 1 à 15, avec un canal d'aspiration de poussières, commençant dans la zone située derrière la lame de scie et s'étendant vers l'arrière, caractérisée en ce que la pièce de maintien (29) constitue la délimitation avant d'une section d'embouchure (51), s'étendant vers le haut dans le carter (5) de l'unité d'entraînement (4), du canal d'aspiration (49) se prolongeant à l'intérieur du carter.
